# EUROPÄISCHE PATENTSCHRIFT

(11) **EP 3 093 613 B1**
(45) Veröffentlichungstag und Bekanntmachung des Hinweises auf die Patenterteilung: **15.05.2019**
(21) Anmeldenummer: 16162630.4
(22) Anmeldetag: 29.03.2016
(51) Int. Cl.: G01B 15/02, G01B 17/02, G01B 21/08, G01B 7/06, G01B 11/06, G01B 7/02

(54) **VERFAHREN ZUM MESSEN UND ANPASSEN DER WANDSTÄRKE EINES ROHRES**
METHOD FOR MEASURING AND MATCHING THE THICKNESS OF A TUBE
PROCEDE DE MESURE ET D'ADAPTATION DE L'EPAISSEUR DE PAROI D'UN TUBE

(30) Priorität: 15.05.2015 AT 3062015
(43) Veröffentlichungstag der Anmeldung: 16.11.2016
(73) Patentinhaber: Tiroler Rohre GmbH, 6060 Hall in Tirol (AT)
(72) Erfinder: Schreitel, Andreas, 6112 Wattens (AT)
(74) Vertreter: Torggler & Hofinger Patentanwälte

(56) Entgegenhaltungen:
- CN-A- 102 059 257
- JP-A- 2003 194 536
- JP-A- 2004 012 366
- JP-A- 2014 232 031
- US-A1- 2010 169 043

## Beschreibung

Die Erfindung betrifft ein Verfahren mit den Merkmalen des Oberbegriffs des Anspruchs 1.

Verfahren zum Messen bzw. Vorrichtungen zum Messen von Wandstärken sind bereits bekannt und werden beispielsweise in der DE 10 2013 218 045 A1 gezeigt. Das im Stand der Technik gezeigte, radiometrische Messgerät kann unter anderem zur Prüfung einer Wandstärke eines Rohres verwendet werden. Nachdem ein Gusskörper wie zum Beispiel ein Rohr aus der Kokille einer Schleudervorrichtung entnommen wurde, wird dessen Wandstärke kontrolliert. Die Wandstärke muss einen Sollwert erreichen - dies wird durch das radiometrische Messgerät ermittelt. Stellt sich heraus, dass das Rohr die Mindestwandstärke nicht erreicht, so gilt dieses als Ausschuss. Um zu geringe Wandstärken verhindern zu können, wird einfach mehr Gussmaterial in die Kokille der Schleudervorrichtung ein geleert, um generell eine dickere Wandstärke zu erreichen. Diese zu dicke Wandstärke ist jedoch nicht immer unbedingt notwendig und führt dazu, dass mehr Gussmaterial benötigt wird, als eigentlich notwendig ist. Weiters kann sein, dass aufgrund der nicht direkt erfolgenden Messung der Wandstärke nach der Entnahme des Rohres an der Schleudervorrichtung ganze Chargen von Rohren das Mindestmaß der Wandstärke nicht erreichen und somit als Ausschuss gelten.

Weitere gattungsgemäße Vorrichtungen werden beispielsweise in der US 2010/169043 A1, der JP 2004 012366 A, der CN 102 059 257 A, der JP 2003 194536 A und der JP 2014 232031 A gezeigt.

Aufgabe der Erfindung ist es, die vorbeschriebenen Nachteile zu vermeiden und ein gegenüber dem Stand der Technik verbessertes Verfahren zum Messen und Anpassen der Wandstärke anzugeben.

Dies wird beim erfindungsgemäßen Verfahren durch die Merkmale des Kennzeichens 30 des Hauptanspruches erreicht. Dadurch, dass die Messung der Wandstärke des Rohres durch die Messvorrichtung berührungslos erfolgt, wird direkt bei der Entnahme des Rohres dessen Wandstärke kontrolliert. Erreicht diese den Sollwert der Wandstärke nicht, so werden die Verfahrensparameter zur Produktion des nächsten Rohres abgeändert. Nach Abänderung dieser Parameter wird aufgrund der Messungen 35 durch die Messvorrichtung ein Rohr mit korrekter Wandstärke erzeugt. Wenn das Rohr nach dem Schleudergießverfahren in einem formstabilen Zustand aus einer in der Schleuderrichtung befindlichen Kokille gezogen wird und die Messung der Wandstärke durch die Messvorrichtung zeitgleich mit der Entnahme des Rohres aus der Kokille erfolgt, so wird wertvolle Produktionszeit eingespart. Die durch die Messvorrichtung ermittelten Daten werden sofort an einen Rechner weitergegeben, um die Verfahrensparameter zu ändern, welche für die Produktion eines weiteren Rohres ausschlaggebend sind.

Wenn die Wandstärke eines Rohres im Zuge des Schleudergießverfahrens durch Verfahrensparameter verändert wird, so kann während der Produktion eines Rohres Einfluss auf die Wandstärke des zu produzierenden Rohres genommen werden. Wenn die durch die Messvorrichtung erzielten Messwerte dieser Verfahrensparameter des Schleudergießverfahrens verändern, so kann ein neues Rohr aufgrund der Messwerte des in der Produktion vorangegangenen Rohres produziert werden.

Wenn die Verfahrensparameter des Schleudergießverfahrens in Abhängigkeit der durch die Messvorrichtung gemessenen Messwerte automatisiert verändert werden, kann wertvolle Produktionszeit eingespart werden. Es ist nicht notwendig, die Verfahrensparameter manuell zu verändern - wie beispielsweise die Drehzahl der Schleudervorrichtung, die Zugabe von Gussmaterial und den Vorschub beim Verändern der Position der Schleudervorrichtung in Relation zur Gießrinne.

Wenn die durch die Messvorrichtung ermittelten Messwerte in einem Rechner gespeichert werden, kann auch nach der Produktion des Rohres noch auf diese Messwerte zurückgegriffen werden, was beispielsweise für das Qualitätswesen und die Qualitätssicherung notwendig ist. Jedes Rohr ist dokumentiert mit seiner Wandstärke - z.B. im Falle von Garantieansprüchen kann auf diese Messwerte zurückgegriffen werden. Weiters kann über diese ermittelten Messwerte längerfristig Erfahrungsschatz aufgebaut werden, der die Wirtschaftlichkeit beim Produzieren der Rohre zu steigern vermag.

Wenn die Messung der Wandstärke des Rohres durch die Messvorrichtung berührungslos durch ein radiometrisches Messverfahren - vorzugsweise durch Gammastrahlung erfolgt - so erfolgt die Messung schnell und verschleißfrei an den Rohren. Ein mechanisches Messsystem würde eventuell auch aufgrund der nach dem Gießverfahren nach wie vor vom Rohr ausgehenden Hitze beschädigt oder beeinträchtigt.

In diesem Zusammenhang sei erwähnt, dass durch die Messung der Messvorrichtung zumindest folgende Verfahrensparameter während des Schleudergießverfahrens beeinflusst werden: Drehzahl der Schleudervorrichtung und/oder Einfüllmenge des Gussmaterials, vorzugsweise Gusseisen, in die Schleudervorrichtung und/oder Vorschub der Schleudervorrichtung relativ zu einer entlang einer in der Schleudervorrichtung angeordneten Gießrinne. Diese drei Verfahrensparameter sind die wichtigsten Verfahrensparameter neben der Temperatur und Viskosität des Gussmaterials, dem Winkel relativ zur Horizontalachse, in dem die Schleudervorrichtung/Kokille sich dreht. Durch das Verändern zumindest dieser Verfahrensparameter wird die Wandstärke des Rohres verändert.

Als besonders vorteilhaft hat sich dabei herausgestellt, wenn das Verfahren folgende Verfahrensschritte beinhaltet:
- Schleudergießen eines Rohres, insbesondere Gusseisenrohres.
- Aktivierung der unmittelbar an der Schleudervorrichtung angeordneten Messvorrichtung zum Erhalt von Messwerten bezüglich der Wandstärke des Rohres,
- Entnahme des formstabilen Rohres aus der Schleudervorrichtung,
- Messung der Wandstärke während der Entnahme des formstabilen Rohres aus der Kokille und Speichern der ermittelten Messwerte in einem Rechner,
- Vorzugsweise automatisches Verändern der Verfahrensparameter des Schleudergießverfahrens durch die ermittelten Messwerte der Wandstärke aus dem Rechner und
- Schleudergießen eines weiteren Rohres mit den angepassten Verfahrensparametern welche sich aus der vorangegangenen Messung der Wandstärke ergeben.

Durch den Durchlauf dieser einzelnen Arbeitsschritte ist die wirtschaftliche Produktion eines Rohres mit einer im Wesentlichen gleichbleibenden Wandstärke gegenüber dem Stand der Technik vereinfacht.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert:
Darin zeigen:
- Fig. 1: Vorderansicht Schleudervorrichtung mit Messvorrichtung,
- Fig. 2: Schematische Darstellung Schleudergießprozess Anfang,
- Fig. 3: Schematische Darstellung Schleudergießprozess Ende,
- Fig. 4: Schematische Darstellung Entnahme Rohr mit zeitgleicher Messung und
- Fig. 5: Prozessflussdiagramm Verfahren zum Messen und Anpassen der Wandstärke.

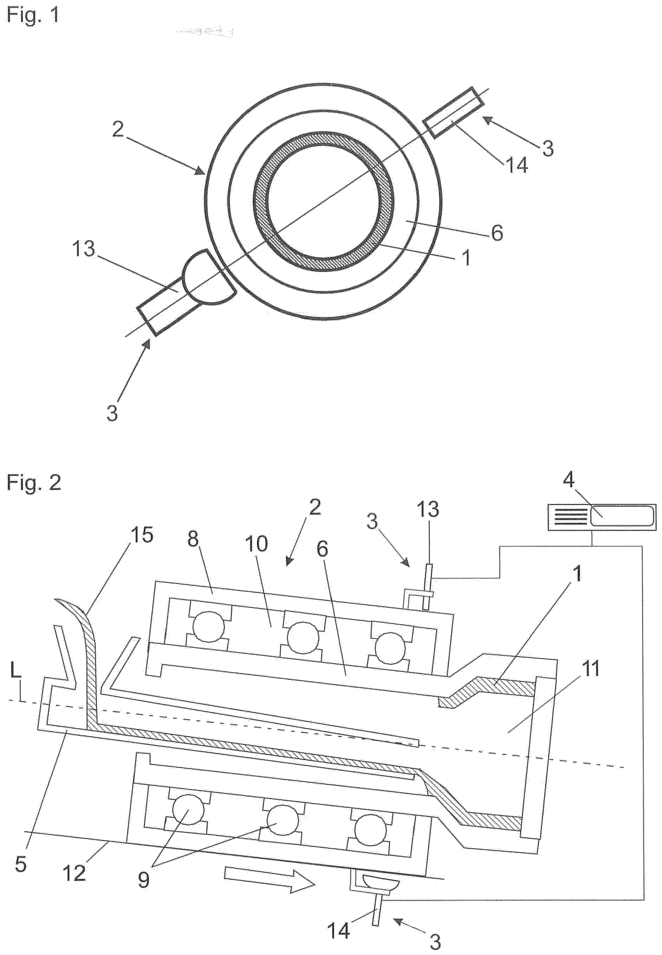

Die Figur 1 zeigt eine Schleudervorrichtung 2 mit einer darin befindlichen Kokille 6, welche ein Rohr 1 beinhaltet. An der Seite, an der das Rohr 1 aus der Kokille 6 entnommen wird, befindet sich die Messvorrichtung 3. Die Messvorrichtung 3 besteht im Wesentlichen aus einem Strahler 13 und einem Detektor 14. Die vom Strahler 13 angegebenen Strahlen werden vom Detektor 14 empfangen und an den Rechner 4 weitergegeben. Der Detektor 14 erfasst den abgeschwächten Strahl und im Rechner wird daraus der Messwert MW ermittelt. Das Ausmaß der Abschwächung beim Erfassen des Messwertes MW gibt dann Aufschluss auf die Wanddicke W des erzeugten Rohres 1 als einzige Variable bei der Durchdringung der Strahlen. Je stärker die Wanddicke W des erzeugten Rohres 1 desto höher ist die Abschwächung des Gammastrahles bei der radiometrischen Ermittlung des Messwertes MW. Die Ermittlung des Messwertes MW erfolgt dabei beim Herausziehen des Rohres 1 aus der Kokille 6. Hierzu ist auch eine Auszugsvorrichtung 7 vorgesehen, welche nach dem Verfestigen des Gussmateriales 15 (in der Figur 1 nicht ersichtlich) des Rohres 1 das Rohr 1 aus der Kokille 6 zieht.

Die Figur 2 zeigt schematisch dargestellt den Schleuderprozess eines Rohres 1. Die Rohraußenkontur wird durch eine metallische Form - der Kokille 6 - vorgegeben. Die Kokille 6 befindet sich in einer längs verfahrbaren Schleudervorrichtung 2. Die Kokille 6 ruht an mehreren Stellen auf Rollen 9 und wird somit in Ihrer Lage gehalten. Im Kühlbereich 10 sorgt ein Kühlmedium - zum Beispiel Wasser - von außen für Kühlung der Kokille 6. Durch einen Elektromotor angetrieben, rotiert die Kokille 6 um ihre Längsachse L. In der muffenseitigen Aufweitung des zu erzeugenden Rohres 1 wird ein der Muffeninnenform des Rohres entsprechender Kern 11 in die Kokille 6 eingesetzt. Dieser Kern 11 ist aus Sand und einem Bindemittel gefertigt. Dieser Kern 11 schließt gleichzeitig die Kokille 6 ab. Die so ausgerüstete Schleudervorrichtung 2 ist zur Muffenseite des Rohres 1 hin geneigt und auf der Rampe 12 längs verfahrbar angeordnet. Am oberen Ende des Maschinengehäuses 8 ist die Gießrinne 5 angeordnet, welche ins Innere der Kokille 6 ragt. Die entlang der Längsachse L längsverfahrbare Schleudervorrichtung 2 lässt sich relativ zur Gießrinne 5 bewegen. Durch eine geregelt gleichmäßige Zuteilungsgeschwindigkeit des Gussmaterials 15 wird erreicht, dass während des Gießvorganges eine konstante Menge an Gussmaterial 15 durch die Gießrinne 5 in die Kokille 6 fließt. Die Gießrinne 5 ragt bei Gießbeginn fast bis zum Muffenende des Rohres 1 in die Kokille 6 hinein. Noch vor dem Einfließen des Gussmaterials 15 wird die Kokille 6 in Rotation versetzt. Das an der Spitze der Gießrinne 5 ausfließende Gussmaterial 15 wird von der sich drehenden Kokille 6 fasst, füllt zunächst den Raum zwischen Kern 11 und Kokille 6 aus und bildet anschließend beim Längsverfahren durch den Vorschub v entlang der Rampe 12 der Schleudervorrichtung 2 den Rohrschaft durch die Zentrifugalkraft aus. Das Gussmaterial 15 legt sich durch die Überlagerung der Drehbewegung der Kokille 6 bzw. des Vorschubes v der Schleudervorrichtung 2 entlang der Rampe 12 spiralförmig an die Innenwand der Kokille 6 an und verläuft im flüssigen Zustand zu einem homogenen Rohr 1. Eine dickere oder dünnere Wandstärke W ergibt sich durch die Änderung der Menge des Gussmaterials 12 für den Gießvorgang, der Drehzahl d der Kokille 6 und dem Vorschub v der Schleudervorrichtung 2 entlang der Rampe 12. Die Drehzahl d der Kokille 6 wird zum Beispiel so gewählt, dass eine Zentrifugalkraft von 15 bis 30 G auf das flüssige Gussmaterial 15 einwirkt. Dabei wird das Gussmaterial 15 verdichtet und eventuelle Oxidationsprodukte, die sich beim Gießvorgang bilden bzw. mitgerissene Schlacke wird nach innen zur Rohrinnenseite des Rohres 1 verdrängt. Dort sind diese leicht zu entfernen, wenn das Rohr 1 die Schleudervorrichtung 2 verlassen hat. Durch das Abkühlen und durch die auftretende Volumenverminderung des Gussmaterials 15 nach dem Aushärten löst sich das Rohr 1 von der Wand der Kokille 6 und kann in Richtung der Muffenseite des Rohres 1 aus der Kokille 6 herausgezogen werden. Diese Verfahren ermöglicht extrem kurze Taktzeiten, weil sich das erstarrte Rohr 1 innerhalb weniger Sekunden aus der Kokille 6 ziehen lässt - unmittelbar danach kann das nächste Rohr 1 gegossen werden, nachdem ein neuer Kern 11 eingesetzt wurde. An der Schleudervorrichtung 2 oder der Maschine in Gehäuse 8 ist die Messvorrichtung 3 befestigt, welche während dem Schleuderverfahren noch keine Messungen vornimmt. Erst bei der Entnahme des Rohres 1 aus der Kokille 6 wird eine Messung durchgeführt.

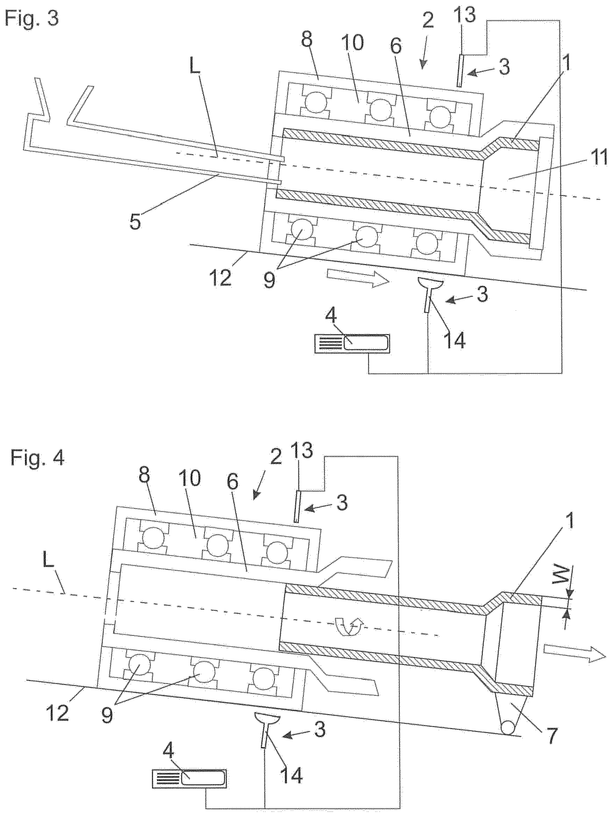

Die Figur 3 zeigt das fertig geschleuderte Rohr 1 in der Kokille 6. Durch den Kühlbereich 10 wird die Aushärtung des Gussmaterials 1 und die Kühlung des Rohres 1 beschleunigt. Erst wenn das Rohr 1 formstabil ist indem das Gussmaterial 15 aushärtet, wird die Drehzahl d der Kokille 6 reduziert. Die Gießrinne 5 ist nahezu am Ende des Rohrschaftes des Rohres 1 angekommen. Die Kokille 6 hat sich bis zu ihrem höchstgelegenen Punkt mit Gussmaterial 15 befüllt.

Figur 4 zeigt die Entnahme des Rohres 1 aus der muffenseitigen Öffnung der Kokille 6. Vorher wurde noch der Kern 11 aus der Muffe des Rohres 1 entfernt. Während der linearen Entnahme des Rohres 1 aus der Kokille 6 durch die Auszugsvorrichtung 7 kann das Rohr 1 zum Beispiel durch die Schleudervorrichtung 2 leicht gedreht werden, um eine Art spiralförmige Messung durch die Messvorrichtung 3 zu generieren. Dabei sendet der Strahler 13 die radiometrischen Strahlen aus, welche vom Detektor 14 empfangen werden. Der Rechner 4 steuert und regelt den Messvorgang und verarbeitet die ermittelten Messwerte MW der Wandstärke W. Aus diesen Messwerten MW werden im Anschluss eventuell neue Verfahrensparameter VP errechnet, die beim Schleudergießen des nächsten Rohres 1 die Wandstärke W beeinflussen. Falls das Messergebnis der Messwerte MW dem Sollwert entspricht, können die Verfahrensparameter VP beibehalten werden und das nächste Rohr 1 wird direkt produziert. Die Messvorrichtung 3 wird am äußeren Bereich des Maschinengehäuses 8 angebracht. Die radiometrische Messung erfolgt durch die Schleudervorrichtung 2 hindurch. Da die Abschwächung des Messstrahles bei Durchdringung des Maschinengehäuses 8, des Kühlbereiches 10 und der Kokille 6 immer gleich bleibt, kann diese als fixer Wert im Rechner 4 hinterlegt werden. Lediglich die eventuell schwankende Wandstärke des Rohres 1 ist als variabler Messwert MW anzusehen. Dieser kann ermittelt werden, wenn sich der Strahler 13 und der Detektor 14 direkt am Umfang des Maschinengehäuses 8 befinden und nicht über dieses bzw. auch die Kokille 6 hinausstehen. Eine indirekte Messung durch die einzelnen Komponenten der Schleudervorrichtung 2 mitsamt der Kokille 6 hindurch kann somit ebenfalls erfolgen.

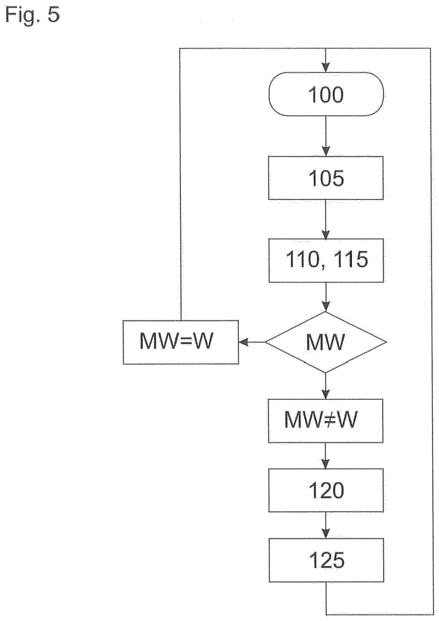

Die Figur 5 zeigt ein Prozessflussdiagramm. Start ist der Schleuderprozess 100. In diesem wird ein Rohr 1 aufgrund der Verfahrensparameter (Drehzahl d, Einfüllmenge em, Vorschub v, ...) ein Rohr 1 mit einer Wandstärke W erzeugt. Der nächste Schritt ist der Abkühlvorgang 105. Während diesem kühlt das Rohr 1 ab und kann im Anschluss aus der Kokille 6 entfernt werden. Darauf folgt der Entnahmeprozess 110 mit der zeitgleichen Ermittlung 115 der Messwerte MW. Wird der Messwert MW erfasst und der entspricht dem Sollmaß der Wandstärke W, so kann direkt der nächste Schleuderprozess 100 eingeleitet werden. Entspricht der Messwert MW nicht der geforderten Wandstärke W, so werden die Verfahrensparameter VP im Berechnungsschritt 120 berechnet. Im Anpassungsschritt 125 werden die Verfahrensparameter VP z.B. an der Schleudervorrichtung 2 und dem Zulauf für das Gießmaterial 15 angepasst und erst nachher der nächste Schleuderprozess 100 gestartet. Durch diese Prozesse erfolgt die Produktion eines Rohres 1 mit einer konstanten Wandstärke W in der Serienfertigung.

### Bezugszeichenliste:

- 1: Rohr
- 2: Schleudervorrichtung
- 3: Messvorrichtung
- 4: Rechner
- 5: Gießrinne
- 6: Kokille
- 7: Auszugsvorrichtung
- 8: Maschinengehäuse
- 9: Rollen
- 10: Kühlbereich
- 11: Kern
- 12: Rampe
- 13: Strahler
- 14: Detektor
- 15: Gussmaterial
- 100: Schleuderprozess
- 105: Abkühlvorgang
- 110: Entnahmeprozess
- 115: Messung
- 120: Berechnungsschritt VP
- 125: Anpassungsschritt VP
- W: Wandstärke
- L: Längsachse (Rohr)
- MW: Messwert
- VP: Verfahrensparameter
- d: Drehzahl
- em: Einfüllmenge
- v: Vorschub

## Patentansprüche

1. Verfahren zum Messen und Anpassen der Wandstärke (W) eines durch ein Schleudergießverfahren hergestellten Rohres (1) während einer Serienfertigung, wobei die Wandstärke (W) durch eine unmittelbar an einer Schleudervorrichtung (2) angeordnete Messvorrichtung (3) gemessen wird, wobei die Messung der Wandstärke (W) des Rohres (1) durch die Messvorrichtung (3) radiometrisch und berührungslos erfolgt, **dadurch gekennzeichnet, dass** die Messung durch die Schleudervorrichtung (2) hindurch erfolgt.

2. Verfahren nach Anspruch 1, **dadurch gekennzeichnet, dass** das Rohr (1) nach dem Schleudergießverfahren in einem formstabilen Zustand aus der Schleudervorrichtung (2) gezogen wird und die Messung der Wandstärke (W) durch die Messvorrichtung (3) zeitgleich mit der Entnahme des Rohres (1) aus der Schleudervorrichtung (2) erfolgt.

3. Verfahren nach Anspruch 2, **dadurch gekennzeichnet, dass** das Rohr (1) sich bei der Entnahme aus der Schleudervorrichtung (2) und während der Messung durch die Messvorrichtung (3) um seine Längsachse (L) dreht.

4. Verfahren nach einem der Ansprüche 1 bis 3, **dadurch gekennzeichnet, dass** die Wandstärke (W) eines Rohres (1) im Zuge des Schleudergießverfahrens durch Verfahrensparameter (VP) verändert wird.

5. Verfahren nach Anspruch 4, **dadurch gekennzeichnet, dass** die Verfahrensparameter (VP) des Schleudergießverfahrens in Abhängigkeit der durch die Messvorrichtung (3) gemessenen Messwerte (MW) verändert werden.

6. Verfahren nach Anspruch 5, **dadurch gekennzeichnet, dass** die Veränderung der Verfahrensparameter (VP) abhängig von den gemessenen Messwerten (MW) automatisiert erfolgt, wobei im Bedarfsfall manuell in den Prozess der Veränderung der Verfahrensparameter (VP) eingegriffen wird.

7. Verfahren nach einem der Ansprüche 1 bis 6, **dadurch gekennzeichnet, dass** die durch die Messvorrichtung (1) ermittelten Messwerte (MW) in einem Rechner (4) gespeichert werden.

8. Verfahren nach einem der Ansprüche 1 bis 7, **dadurch gekennzeichnet, dass** die Messung der Wandstärke (W) durch das radiometrische Messverfahren durch Gammastrahlung erfolgt.

9. Verfahren nach einem der Ansprüche 1 bis 8, **dadurch gekennzeichnet, dass** die Messvorrichtung (3) einen Strahler (13) und einen Detektor (14) aufweist, wobei der Detektor (14) die vom Strahler (13) ausgesendeten Strahlen empfängt.

10. Verfahren nach einem der Ansprüche 1 bis 9, **dadurch gekennzeichnet, dass** durch die Messung der Messvorrichtung (3) zumindest folgende Verfahrensparameter (VP) während des Schleudergießverfahrens beeinflusst werden:
- Drehzahl (d) der Schleudervorrichtung (2) und/oder
- Einfüllmenge (em) des Gussmaterials (15) - vorzugsweise Gusseisens - in die Schleudervorrichtung (2) und/oder
- Vorschub (v) der Schleudervorrichtung (2) relativ zu einer entlang einer in der Schleudervorrichtung (2) angeordneten Gießrinne (5).

11. Verfahren nach einem der Ansprüche 1 bis 10, **dadurch gekennzeichnet, dass** das Verfahren folgende Arbeitsschritte beinhaltet:
- Schleudergießen eines Rohres (1), insbesondere Gusseisenrohr.
- Aktivierung der unmittelbar an der Schleudervorrichtung (2) angeordneten Messvorrichtung (3) zum Erhalt von Messwerten (MW) bezüglich der Wandstärke (W) des Rohres (1),
- Entnahme des formstabilen Rohres (1) aus der Schleudervorrichtung (2),
- Messung der Wandstärke (W) während der Entnahme des formstabilen Rohres (1) aus der Schleudervorrichtung (2) und Speichern der ermittelten Messwerte (MW) in einem Rechner (4),
- automatisches Verändern der Verfahrensparameter (VP) des Schleudergießverfahrens durch die ermittelten Messwerte (MW) der Wandstärke (W) aus dem Rechner (4) und
- Schleudergießen eines weiteren Rohres (1) mit den angepassten Verfahrensparametern (VP) welche sich aus der vorangegangenen Messung der Wandstärke (W) ergeben.

## Claims

1. A method of measuring and adapting the wall thickness (W) of a tube (1) produced by a centrifugal casting process during mass production, wherein the wall thickness (W) is measured by a measuring device (3) arranged directly at a centrifuging device (2), wherein measurement of the wall thickness (W) of the tube (1) by the measuring device (3) is effected radiometrically and contact-less, **characterised in that** measurement is effected through the centrifuging device (2).

2. A method according to claim 1 **characterised in that** the tube (1) is pulled out of the centrifuging device (2) after the centrifugal casting process in a dimensionally stable state and measurement of the wall thickness (W) is effected by the measuring device (3) at the same time with removal of the tube (1) from the centrifuging device (2).

3. A method according to claim 2 **characterised in that** the tube (1) rotates about its longitudinal axis (L) upon removal from the centrifuging device (2) and during measurement by the measuring device (3).

4. A method according to one of claims 1 to 3 **characterised in that** the wall thickness (W) of a tube (1) is altered in the course of the centrifugal casting process by process parameters (VP).

5. A method according to claim 4 **characterised in that** the process parameters (VP) of the centrifugal casting process are altered in dependence on the measurement values (MW) measured by the measuring device (3).

6. A method according to claim 5 **characterised in that** the alteration in the process parameters (VP) depending on the measured measurement values (MW) takes place automatically, wherein if necessary intervention is effected manually in the process of altering the process parameters (VP).

7. A method according to one of claims 1 to 6 **characterised in that** the measurement values (MW) determined by the measuring device (1) are stored in a computer (4).

8. A method according to one of claims 1 to 7 **characterised in that** measurement of the wall thickness (W) by the radiometric measuring method is effected by gamma radiation.

9. A method according to one of claims 1 to 8 **characterised in that** the measuring device (3) comprises a radiating means (13) and a detector (14), wherein the detector (14) receives the radiation emitted by the radiating means (13).

10. A method according to one of claims 1 to 9 **characterised in that** at least the following process parameters (VP) are influenced by the measurement of the measuring device (3) during the centrifugal casting process:
- speed of rotation (d) of the centrifuging device (2) and/or
- filling amount (em) of the casting material (15) - preferably cast iron - in the centrifuging device (2) and/or
- advance (v) of the centrifuging device (2) relative to a casting runner (5) arranged along the centrifuging device (2).

11. A method according to one of claims 1 to 10 **characterised in that** the method comprises the following working steps:
- centrifugally casting a tube (1), in particular a cast iron pipe,
- activating the measuring device (3) arranged directly at the centrifuging device (2) to obtain measurement values (MW) with respect to the wall thickness (W) of the tube (1),
- removal of the dimensionally stable tube (1) from the centrifuging device (2),
- measuring the wall thickness (W) during removal of the dimensionally stable tube (1) from the centrifuging device (2) and storage of the determined measurement values (MW) in a computer (4),
- automatically changing the process parameters (VP) of the centrifugal casting process by the measurement values (MW) of the wall thickness (W) from the computer (4) and
- centrifugally casting another tube (1) with the adapted process parameters (VP) which result from the preceding measurement of the wall thickness (W).

## Revendications

1. Procédé de mesure et d'adaptation de l'épaisseur de paroi (W) d'un tube (1) fabriqué par un procédé de coulée centrifuge pendant une fabrication en série, dans lequel l'épaisseur de paroi (W) est mesurée par un dispositif de mesure (3) directement agencé sur un dispositif centrifuge (2), dans lequel la mesure de l'épaisseur de paroi (W) du tube (1) est effectuée sans contact et de façon radiométrique par le dispositif de mesure (3), **caractérisé en ce que** la mesure s'effectue à travers le dispositif centrifuge (2).

2. Procédé selon la revendication 1, **caractérisé en ce que** le tube (1), après le procédé de coulée centrifuge, est retiré du dispositif centrifuge (2) dans un état indéformable et la mesure de l'épaisseur de paroi (W) est effectuée par le dispositif de mesure (3) en même temps que le tube (1) est prélevé du dispositif centrifuge (2).

3. Procédé selon la revendication 2, **caractérisé en ce que** le tube (1) est amené en rotation autour de son axe longitudinal (L) lors de son prélèvement du dispositif centrifuge (2) et pendant la mesure par le dispositif de mesure (3).

4. Procédé selon l'une quelconque des revendications 1 à 3, **caractérisé en ce que** l'épaisseur de paroi (W) d'un tube (1) est modifiée par des paramètres de procédé (VP) au cours du procédé de coulée centrifuge.

5. Procédé selon la revendication 4, **caractérisé en ce que** les paramètres de procédé (VP) du procédé de coulée centrifuge sont modifiés en fonction des valeurs de mesure (MW) mesurées par le dispositif de mesure (3).

6. Procédé selon la revendication 5, **caractérisé en ce que** la modification des paramètres de procédé (VP) s'effectue de manière automatique en fonction des valeurs de mesure (MW) mesurées, dans lequel, si nécessaire, on intervient manuellement dans le processus de modification des paramètres de procédé (VP).

7. Procédé selon l'une quelconque des revendications 1 à 6, **caractérisé en ce que** les valeurs de mesure (MW) déterminées par le dispositif de mesure (3) sont mises en mémoire dans un ordinateur (4).

8. Procédé selon l'une quelconque des revendications 1 à 7, **caractérisé en ce que** la mesure de l'épaisseur de paroi (W) s'effectue par l'intermédiaire du procédé de mesure radiométrique par rayonnement gamma.

9. Procédé selon l'une quelconque des revendications 1 à 8, **caractérisé en ce que** le dispositif de mesure (3) comprend un élément rayonnant (13) et un détecteur (14), dans lequel le détecteur (14) reçoit les rayons émis par l'élément rayonnant (13).

10. Procédé selon l'une quelconque des revendications 1 à 9, **caractérisé en ce qu'**au moins les paramètres de procédé (VP) suivants sont influencés pendant le procédé de coulée centrifuge par la mesure du dispositif de mesure (3) :
- la vitesse de rotation (d) du dispositif centrifuge (2) et/ou
- la quantité de versement (em) du matériau à couler (15) - de préférence de fonte - dans le dispositif centrifuge (2) et/ou
- l'avancement (v) du dispositif centrifuge (2) par rapport à et le long d'un canal de coulée (5) agencé dans le dispositif centrifuge (2).

11. Procédé selon l'une quelconque des revendications 1 à 10, **caractérisé en ce que** le procédé comporte les étapes suivantes :
- la coulée centrifuge d'un tube (1), en particulier d'un tube en fonte,
- l'activation du dispositif de mesure (3) directement agencé sur le dispositif centrifuge (2) pour l'obtention de valeurs de mesure (MW) concernant l'épaisseur de paroi (W) du tube (1),
- le prélèvement du tube (1) indéformable du dispositif centrifuge (2),
- la mesure de l'épaisseur de paroi (W) pendant le prélèvement du tube (1) indéformable du dispositif centrifuge (2) et la mise en mémoire des valeurs de mesure (MW) déterminées dans un ordinateur (4),
- la modification automatique des paramètres de procédé (VP) du procédé de coulée centrifuge à l'aide des valeurs de mesure (MW) déterminées de l'épaisseur de paroi (W) provenant de l'ordinateur (4) et
- la coulée centrifuge d'un autre tube (1) à l'aide des paramètres de procédé (VP) adaptés, lesquels sont obtenus à partir de la mesure précédente de l'épaisseur de paroi (W).
